**Europäisches Patentamt**

**European Patent Office**

**Office européen des brevets**

(19)

(11) Veröffentlichungsnummer : **0 394 304 B1**

(12) # EUROPÄISCHE PATENTSCHRIFT

(45) Veröffentlichungstag der Patentschrift :
**12.08.92 Patentblatt 92/33**

(51) Int. Cl.⁵ : **A63H 3/50**, G09B 19/00

(21) Anmeldenummer : **89900122.6**

(22) Anmeldetag : **26.11.88**

(86) Internationale Anmeldenummer :
**PCT/EP88/01086**

(87) Internationale Veröffentlichungsnummer :
**WO 89/05178 15.06.89 Gazette 89/13**

(54) **DEMONSTRATIONSVORRICHTUNG.**

(30) Priorität : **02.12.87 DE 8715916 U**

(43) Veröffentlichungstag der Anmeldung :
**31.10.90 Patentblatt 90/44**

(45) Bekanntmachung des Hinweises auf die
Patenterteilung :
**12.08.92 Patentblatt 92/33**

(84) Benannte Vertragsstaaten :
**AT BE CH DE FR GB IT LI LU NL SE**

(56) Entgegenhaltungen :
**DE-U-86 101 102**
**US-A- 3 512 775**

(73) Patentinhaber : **SCHMITZ, Karl-Werner**
**Im Rheinwinkel 20**
**W-5000 Köln 90 (DE)**
Patentinhaber : **BERGFELDER, Manfred**
**Gimborner Weg 3**
**W-5000 Köln 80 (DE)**

(72) Erfinder : **SCHMITZ, Karl-Werner**
**Im Rheinwinkel 20**
**W-5000 Köln 90 (DE)**
Erfinder : **BERGFELDER, Manfred**
**Gimborner Weg 3**
**W-5000 Köln 80 (DE)**

(74) Vertreter : **Bauer, Wulf, Dr.**
**Wolfgang-Müller-Strasse 12**
**W-5000 Köln 51 (Marienburg) (DE)**

EP 0 394 304 B1

## Beschreibung

Die Erfindung betrifft eine Demonstrationsvorrichtung. Derartige Vorrichtungen haben einerseits einen Spielzweck, sie sollen den Spielenden zur Handhabung anregen, gerne erfaßt und benutzt werden. Andererseits sollen sie aber auch eine Aussage, insbesondere einen Lehrinhalt, vermitteln. Dieser ergibt sich aus der besonderen Gestaltung der Demonstrationsvorrichtung und kann innerhalb eines gewissen Bereiches unterschiedlicher Lehrinhalte, die jedoch ähnliche Zielsetzung haben, variiert werden.

Beim Spiel mit der Demonstrationsvorrichtung soll der Lehrinhalt möglichst klar hervortreten, ohne aber zunächst Hauptziel zu sein. Das Spiel soll dazu dienen, den Lehrinhalt und damit die Aussage auf andere Weise und möglicherweise besser erfaßlich darstellen zu können, als dies durch eine sprachliche Erläuterung, eine schriftliche Beschreibung oder eine Zeichnung, die jeweils denselben Lehrinhalt betreffen, möglich ist. Wenn der Lehrende die Demonstrationsvorrichtung benutzt, kann er die mit dieser verbundenen Aussagen dem Lernenden besser verständlich machen. Dabei erleichtert die in der Hand des Lehrenden befindliche Demonstrationsvorrichtung den Vortrag, das Spiel zwingt den Vortragenden, die Einzelteile oder einzelnen Elemente der Demonstrationsvorrichtung anzusprechen, so daß der zu vermittelnde Inhalt ins Gespräch kommt, insofern wirkt die Demonstrationsvorrichtung auch als Vortragsplan. Wenn der Lernende die Demonstrationsvorrichtung benutzt, kann er die Aussage körperlich erfassen, wodurch der Lerneffekt verstärkt wird. Eine Demonstrationsvorrichtung der eingangs genannten Art macht sich insofern die Erfahrung zunutze, daß eine ausschließlich durch die Sprache erfolgende Vermittlung des Lehrinhaltes, eine optische Vermittlung des Lehrinhaltes oder eine Kombination sprachlicher und optischer Wissensvermittlung eine geringere Wahrscheinlichkeit haben, vom Lernenden dauerhaft aufgenommen zu werden, als eine körperlich mit den Händen begriffene, in ein Spiel gekleidete Aussage, also haptisches Lernen.

Hiervon ausgehend hat sich die Erfindung die Aufgabe gestellt, eine Demonstrationsvorrichtung anzugeben, mit der eine stufenweise bessere Absicherung einer menschlichen Figur gegen Kippen, also durch eine zunehmend verbesserte Abstützung, dargestellt werden kann. Eine derartige Demonstrationsvorrichtung eignet sich beispielsweise zur Erläuterung der Absicherung einer Person durch schrittweise verbesserten Versicherungsschutz, sie eignet sich zur Erläuterung der schrittweise verbesserten Stabilität einer Person gegen Angriffe, die diese zum Kippen bringen könnten. Neben dem bereits erwähnten Versicherungsschutz läßt sich somit die stufenweise zu verbessernde berufliche Absicherung eines Menschen erläutern, wie dieser sie durch beruffördernde Maßnahmen, beispielsweise einer Ausbildung, erreichen kann, die Entwicklung eines Menschen ganz allgemein hin zu einem Reifeprozeß darstellen oder dergleichen.

Die Aufgabe wird gelöst durch eine Demonstrationsvorrichtung, die gekennzeichnet ist durch eine menschliche Figur, die einen Kopfbereich und einen Fußbereich hat, der eine nach unten konvexe oder spitze Fußfläche hat, und durch einen Block, dessen Höhe der Höhe des Fußbereichs angepafft ist, der aus mindestens zwei und vorzugsweise drei übereinander schichtbaren Lagen aufgebaut ist und eine nach oben offene Ausnehmung für die Aufnahme des Fußbereichs hat, die durch jeweils eine Öffnung in jeder Lage ausgebildet wird, anbei die Öffnung der ersten untersten gegenüber dem von ihr aufgenommen, unteren Teilstück des Fußbereichs ringsum ein derartiges Übermaß (Freiraum) aufweist, daß allein die erste Lage den Fußbereich und damit die Figur nur labil hält und bei Erschütterung, z. B. bei einem geringen Stoß gegen die Figur nicht gegen ein Kippen zu halten vermag und die Öffnung der weiteren Lage dem ihr entsprechenden Teilstück des Fußbereichs formmäßig so angepafft ist, daß der von den Öffnungen der übereinander geschichteten Lagen aufgenommene Fußbereich nicht in einem Winkelbereich größer +/- 10° aus der Vertikalen kippbar ist, und dadurch, daß jede Lage aus mindestens zwei Bausteinen aufgebaut ist, die jeweils an einer Seite eine hinterschnittfreie Aussparung haben und diese Aussparungen bei zusammengesetzten Bausteinen einer Lage die Öffnung bilden.

In einer bevorzugten Ausbildung der Demonstrationsvorrichtung ist diese gekennzeichnet durch eine menschliche Figur, die einen Kopfbereich und einen Fußbereich hat, der eine nach unten konvexe oder spitze Fußfläche hat, und durch einen Block, dessen Höhe der Höhe des Fußbereichs angepaßt ist, der aus in drei übereinander schichtbaren Lagen angeordneten Bausteinen aufgebaut ist, und eine nach oben offene Ausnehmung für die Aufnahme des Fußbereichs hat, die durch jeweils eine Öffnung in jeder Lage ausgebildet wird, wobei a) die Öffnung der ersten Lage gegenüber dem von ihr aufgenommenen, unteren Teilstück des Fußbereichs ringsum ein derartiges Übermaß aufweist, das die erste Lage allein den Fußbereich und damit die Figur nicht gegen ein Kippen zu halten vermag, b) zwischen der Öffnung der zweiten Lage und dem entsprechenden Teilstück des Fußbereichs ein Luftspalt ringsrum verbleibt, der so bemessen ist, daß der von den übereinander geschichteten ersten und zweiten Lagen aufgenommen Fußbereich in einem Winkelbereich kleiner +/- 80°, vorzugsweise kleiner +/- 45° gegenüber der Vertikalen innerhalb der Öffnungen kippbar ist, bei größerem Kippwinkel aber ein Formschluß zwischen diesen Öffnungen und dem Fußbereich auftritt und c) die Öffnung der dritten Lage dem ihr entsprechenden Teilstück des Fußbereichs formäßig so angepaßt ist, daß der von den Öffnungen der übereinander geschichteten drei Lagen aufgenommen Fußbereich nicht in einem Winkelbereich größer als +/- 10° aus der Vertikalen kippbar ist.

In einer Ausbildungsform der erfindungsgemäßen Demonstrationsvorrichtung als Lehr- und Lernspiel für das Absichern eines Menschen durch unterschiedliche Versicherungsarten stellt der Block die persönliche Leistungsfähigkeit des durch die Figur symbolisierten Menschen dar. Auf einer Seitenfläche der einzelnen Lagen werden die unterschiedlichen Versicherungsarten, die für eine vollständige Absicherung notwendig sind, angegeben, auf der gegenüberliegenden Seitenfläche ist der Begriff "Arbeitskraft" aufgebracht. Wenn ein Versicherungsvertreter die Demonstrationsvorrichtung in die Hand nimmt, soll er die einzelnen Lagen nacheinander auseinanderziehen und dabei vorführen und erläutert, daß mit Nachlassen oder gar Wegfall der Arbeitskraft auch die Standkraft der menschlichen Person in Frage gestellt wird. Anschließend soll der Versicherungskunde dann den Block wieder aufbauen und dabei begreifen, wie die Standfähigkeit der menschlichen Figur zunehmend verbessert wird.

Beim Spielen wird durch Aufeinanderschichten der Lagen die durch eine Puppe dargestellte menschliche Figur zunehmend besser gegen Kippbewegungen, die im Leben dieser Person zu erwartende Angriffe symbolisieren sollen, abgestützt. Sind alle drei Schichten aufgebaut, so wird die Figur kippsicher gehalten, sie kann also durch einen von außen auf sie einwirkenden Stoß nicht aus ihrer vertikalen Position bewegt werden. Wird die oberste Lage entfernt, indem die Bausteine weggenommen werden, die diese oberste Lage bilden, so ist eine Kippbewegung der Figur innerhalb eines Kegels möglich, die Figur kann somit kippen, jedoch wird sie innerhalb eines vorgegebenen Winkelbereichs gehalten, sie kann somit nicht vollständig umkippen. Wird auch die zweite Lage entfernt, indem die entsprechenden Bausteine weggenommen werden, so ist die Figur nur noch mangelhaft abgestützt. Zwar kann sie aufrecht gestellt werden, sie ist aber labil und fällt bei einem geringen seitlichen Stoß vollständig um, wird also praktisch nicht durch die erste Lage gehalten. Ohne die erste Lage ist die Figur vollständig labil, sie kann nicht zum Stehen gebracht werden.

In der bevorzugten Ausbildung der Demonstrationsvorrichtung gemäß der Erfindung als Lernspiel zur Erläuterung der stufenweise verbesserten Absicherung eines Menschen durch schrittweise verbesserten Versicherungsschutz beginnt die Demonstration zunächst durch die Puppe in Form der menschlichen Figur allein, ohne den Block. Es gelingt nicht, die Figur aufrecht hinzustellen. Ein erster Ansatz einer Absicherung der Figur wird nur dadurch erzielt, daß die erste Lage angeordnet wird. Ein erster Ansatz einer Absicherung der Figur wird dadurch erzielt, daß die erste Lage angeordnet wird. Sie umfaßt zwar den Fußbereich der Figur, wodurch eine sichtbare Unterstützung der Figur erzielt wird, die Unterstützung ist aber noch nicht ausreichend, um ein vollständiges Kippen der Figur ausschließen zu können. Dabei fällt die Figur nicht in die freie, leere Fläche, sondern auf die erste Lage, insgesamt wird durch die erste Lage eine gewisse Absicherung bewirkt, die aber - wie sich unmittelbar durch das Spielen ergibt - nicht ausreichend ist. Wird nun die zweite Lage auf die erste gelegt, so findet nicht nur eine sichtbar bessere Abstützung des Fußbereichs der Figur statt, sondern wird auch der Winkel begrenzt, mit dem die Figur aus der Vertikalen bei einem Stoß bewegt werden kann. Die Öffnung der zweiten Lage ist so auf den Fußbereich abgestimmt, daß die Figur nur in einem Winkelbereich bewegt werden kann. Sie wird gegen vollständiges Umfallen gesichert, ist aber noch nicht soweit abgesichert, daß sie auch bei Stößen stets in der Vertikalen gehalten wäre. Dies wird erst durch Auflegen der dritten Lage erzielt. Diese umfaßt den Fußbereich der Figur so, daß die Figur auch bei einem Stoß nicht mehr aus der Vertikalen heraus gekippt werden kann, also nun standfest gegen Schicksalsschläge und damit ausreichend abgesichert ist. Die einzelnen Bausteine, die den Block bilden, können so beschriftet oder gekennzeichnet, sein, daß sie gewisse Versicherungsarten spezifizieren. Durch Aufschichten der unterschiedlichen Versicherungen wird schrittweise die notwendige Standfestigkeit erzielt.

Es ist vorteilhaft, die Lagen jeweils mit gleicher Höhe auszuführen.

In einer Weiterbildung der Erfindung wird vorgeschlagen, die Balligkeit des Fußbereichs innerhalb der ersten Lage so auszubilden, daß die rotationssymmetrische Kontur innerhalb einer Halbkugel mit dem Radius der Öffnung der ersten Lage bleibt. Hierdurch ist sichergestellt, daß die Figur - ähnlich einem Kugelgelenk - gegenüber der ersten Lage gekippt werden kann, dabei aber, wenn sie umfällt, auf die erste Lage fällt.

In einer weiteren Verbesserung wird vorgeschlagen, jede Lage aus jeweils zwei Bausteinen aufzubauen, die gleiche Grundfläche haben und im zusammengesetzten Zustand sich auf einer Durchmesserlinie der Öffnung der jeweiligen Lage berühren. Diese Konstruktion ermöglicht es, die Absicherung der Figur schrittweise aufzubauen, ohne die Figur selbst bewegen zu müssen. Der Block kann aus insgesamt sechs Bausteinen, die alle untereinander die gleiche Grundfläche haben und im wesentlichen formgleich sind, aufgebaut werden. Die Demonstrationsvorrichtung hat hierdurch eine Klarheit und einfache Gestaltung, die auch ästhetisch eine positive Wirkung hat. Die Bausteine der einzelnen Lagen sollen sich jedoch so voneinander unterscheiden, daß sie nicht miteinander verwechselt werden können, also beispielsweise nicht ein Baustein der ersten Lage irrtümlich für die zweite Lage benutzt wird. Um dies zu erreichen, wird in einer Verbesserung vorgeschlagen, die einzelnen Bausteine jeder Lage so durch Formvorsprünge und entsprechende Ausnehmungen im anderen Baustein, durch Anordnung von Magneten, durch Haftmittel oder dergleichen auszubilden, daß eine falsche Schichtung nicht möglich ist, jedenfalls nicht zu einem vollständigen Block führen kann.

In einer bevorzugten Ausbildung ist der Block ein gerades Prisma, er ist vorzugsweise quaderförmig oder zylindrisch. Die formmäßig klare und einfache Gestaltung des Blocks lenkt nicht vom zu vermittelnden Lehrinhalt ab und ermöglicht eine ästhetisch gute Gestalt des Blocks. Die einzelnen Bausteine bekommen eine einfache Grundform, wodurch wiederum ihre Herstellung und auch der Zusammenbau erleichert werden.

Schließlich kann im Bereich der Fußfläche eine keinflächige Abplattung vorgesehen sein, die so ausgebildet ist, daß die Figur allein auf einer horizontalen Unterlage mit etwas Geschick vertikal aufgestellt werden kann. Da die Abplattung jedoch sehr klein dessen ist, ist dieser Zustand im wesentlichen labil, die Figur kippt bei der geringsten Erschütterung um.

Weitere Vorteile und Merkmale der Erfindung ergeben sich aus den übrigen Ansprüchen sowie der nun folgenden Beschreibung nicht einschränkend zu verstehender Ausführungsbeispiele der Erfindung, die unter Bezugnahme auf die Zeichnung näher erläutert werden. In dieser zeigen:

Fig. 1 eine perspektivische Darstellung der Demonstrationsvorrichtung mit dreilagigem Block, der den Fußbereich einer Figur aufnimmt,

Fig. 2 ein Schnitt entlang der Schnittlinie II - II in Figur 1,

Fig. 3 einen Schnitt entsprechend Fig. 2, jedoch bei abgenommener oberster (dritter) Lage,

Fig. 4 eine Draufsicht auf die zwei Bausteine einer ersten Lage,

Fig. 5 eine Draufsicht auf einen Block in Zylinderform (ohne menschliche Figur),

Fig. 6 einen Schnitt entlang der Schnittlinie VI - VI in Fig. 5,

Fig. 7 ein Schnittbild entsprechend Fig. 2, jedoch mit einem keglich ausgebildeten Fußbereich und

Fig. 8 eine perspektivische Darstellung der Figur mit pyramidenförmigem Fußbereich.

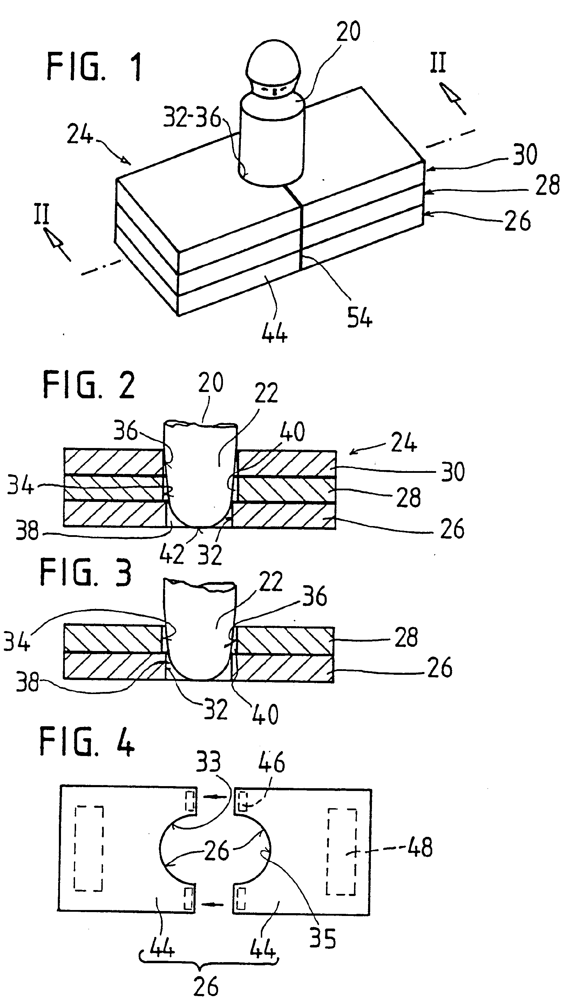

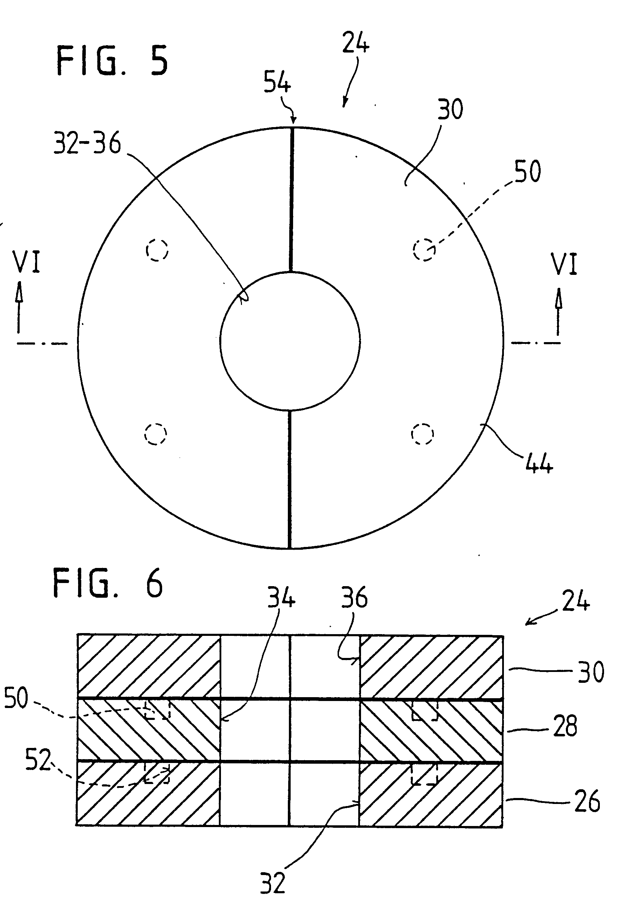

Die Demonstrationsvorrichtung besteht aus einer menschlichen Figur 20 in Form einer Puppe, die im gezeigten Ausführungsbeispiel nicht nur einen rotationssymmetrischen Fußbereich 22 aufweist, sondern weitestgehend rotationssymmetrisch ist. Die komplett aufgebaute Demonstrationsvorrichtung, wie aus Fig. 1 ersichtlich ist, besteht zudem noch aus einem Block 24, der im Ausführungsbeispiel nach den Figuren 1 bis 4 sowie Quaderform und im Ausführungsbeispiel nach den Figuren 5 und 6 Zylinderform hat. Andere Formen, insbesondere gerade Prismen mit sechseckiger Grundfläche, ovaler Grundfläche oder dergleichen sind möglich. Die Höhe des Fußbereichs 22 entspricht der Höhe des Blocks 24 und beträgt etwa 30 bis 50 Prozent der Gesamthöhe der Figur 20. Als "Fußbereich" wird derjenige Teil der Figur 20 verstanden, der vom Block 24 aufgenommen wird, unabhängig von den tatsächlichen Proportionen oder Gegebenheiten. Der Block 24 ist aus drei gleichhohen, übereinander schichtbaren Lagen 26 bis 30 aufgebaut, anbei jede Lage aus zwei Bausteinen 44, wie sie insbesondere aus Fig. 4 ersichtlich sind, zusammengesetzt ist. Der Block 24 hat eine nach oben offene Ausnehmung, die in den Ausführungsbeispielen nahezu zylindrisch ist und durch nahezu gleichgroße Öffnungen 32 bis 36 in den einzelnen Lagen 26 bis 10 gebildet wird. Dieser Ausnehmung 32 bis 36 ist der Fußbereich 22 der Figur 20 angepaßt.

Bis zur Höhe der ersten Lage 26 ist der Fußbereich teilkugelig ausgebildet, anbei der Kugelradius etwas geringer ist als der Radius der kreisrunden Öffnung 32 der ersten Lage. Die Höhe der ersten Lage 26 ist kleiner als dieser Radius. Dadurch kommt es zwar, wie aus den Figuren 2 und 3 ersichtlich ist, am oberen Rand der Öffnung 32 der ersten Lage 26 zu einer gewissen Berührung mit dem teilkugeligen Unterteil des Fußbereichs 22, so daß eine gewisse Abstützung erzielt wird, der erzielte Halt ist jedoch labil und die Figur 20 fällt bei dem geringsten Stoß um, nämlich auf die erste Lage 26.

Im Bereich der zweiten Lage 28 ist der Fußbereich im wesentlichen kegelstumpfförmig, es bleibt ein ringförmiger Luftspalt 40 zwischen der Öffnung 34 und diesem Teil des Fußbereichs 22. Dieser ist so bemessen, daß die Figur 20 innerhalb eines gewissen Winkelbereichs, somit innerhalb eines Kegels, bewegt werden kann. Dies ergibt sich insbesondere aus Fig. 3, aus der ersichtlich ist, daß der Fußbereich 22 ringsum nicht mit der Öffnung 34 in Kontakt steht. Wird die Figur 20 in der gezeigten Position angestoßen, so kippt sie etwas, wird dann aber gehalten, fällt also nicht vollständig um. Charakteristisch hierbei ist, daß nicht wie beim Zusammenwirken zwischen Fußbereich und lediglich der ersten Lage 26 ein gewisser Reibschluß, nicht aber ein Formschluß erzielt wird, sondern daß hier bei einem Kippen der Figur 20 um den angegebenen Winkelbereich sich der Fußbereich soweit querstellt, bis er sich innerhalb der zusammenwirkenden Öffnungen 32, 34 fängt, also gegen ein Weiterkippen gesichert ist.

Auch im Bereich der dritten Lage 30 ist der Fußbereich stumpfkeglig, wobei die Kegelform fortgesetzt wird. Diese ist so dessen, daß die dritte Lage 30 praktisch spielfrei mit ihrem oberen Rand am Fußbereich 22 anliegt, wie dies aus Fig. 2 ersichtlich ist. Eine Kippbewegung der Figur 20 ist unter diesen Umständen praktisch nicht möglich, jedenfalls stark eingeschränkt.

Im untersten Bereich kann die Figur 20 an der Stelle 42 eine kleinflächige Einlage mit großer Reibung, beispielsweise ein kleines Stück Gummi aufweisen, das nur sehr geringfügig gegenüber der teilkugeligen Kontur vorsteht. Es bewirkt für den Fall, daß entsprechend Figur 4 die dritte Lage entfernt ist oder gar die zweite und die dritte Lage entfernt sind, eine gewisse Stabilität der Figur 20 gegen Erschütterungen.

Anstelle einer nahezu zylindrischen Öffnung 32 bis 36, wie sie aus den Ausführungsbeispielen ersichtlich ist, kann der Fußbereich 22 exakt zylindrisch ausgeführt sein oder die Öffnung 32 bis 36 sich nach oben ausweiten. Es ist auch nicht nötig, die Öffnung 32 der ersten Lage durchgehend auszubilden, sie kann also unten geschlossen sein, sofern nur sichergestellt ist, daß dadurch kein formmäßiger Halt der Figur 20 erzielt wird. Ist der Boden der Öffnung 32 der ersten Lage beispielsweise in Form einer Wanne oder der Kugelgestalt des balligen Teils des Fußbereichs 22 angepafft, so wird ein gewisser Reibschluß erzielt, der ähnlich wie die Stelle 42 wirkt.

Wie bereits erläutert wurde, besteht jede Lage 26 bis 30 aus jeweils zwei Bausteinen 44, die auf einer Durchmesserlinie der Öffnung 32 bis 36 im zusammengebauten Zustand aneinandergrenzen. Figur 4 zeigt den Zustand der untersten Lage 26 vor dem Zusammenfügen der beiden Bausteine 44. Die Bausteine haben gleiche Grundfläche, im Ausführungsbeispiel nach den Figuren 1 bis 4 auch die gleiche Form. Jeder Baustein ist ein Quader mit einer halbkreisförmigen Aussparung 33 bzw. 35, die zusammen die jeweilige Öffnung 32 bis 34 bilden. Entscheidend ist, daß die Aussparungen 33, 35 keinen Hinterschnitt haben, also sich nicht nach innen hin irgendwie ausweiten. Dadurch ist sichergestellt, daß der Fußbereich 22 nicht formschlüssig in einer Aussparung 33, 35 gehalten ist und samit die Bausteine 44 von der Figur 20 weggezogen werden können, ohne diese mitzureißen.

In die Quader sind als Verbindungselemente Magnete 46, 48 eingelassen. Die Magnate 46 befinden sich an den Stirnflächen im Bereich der Trennungslinie der Lage 26 bis 30 und sind so angeordnet und polarisiert, daß sie eine Verbindung der beiden Bausteine 44 der jeweiligen Lage 26, 28 bzw. 30 sicherstellen. Die ebenfalls eingelassenen, also unsichtbaren Magnete 48 sichern dagegen die Verbindung der einzelnen Lagen 26 bis 30 untereinander. Sie sind nicht unbedingt erforderlich. Sie sind ebenfalls so angeordnet und polarisiert, daß eine Magnetverbindung zwischen der ersten Lage 26 und der zweiten Lage 28 sowie zwischen der zweiten Lage 28 und der dritten Lage 30 erzielt wird. Demgemäß haben die erste Lage 26 und die dritte Lage 30 jeweils nur auf einer Fläche Magneten 48, die mittlere, zweite Lage 28 aber auf beiden Hauptflächen. Für eine Magnetverbindung genügt auch, daß auf einer Seite ein ferromagnetisches Teil eingebettet ist, dann aber wird immer eine Magnetverbindung erzielt, ohne daß eine Abstoßung auftreten kann. In einer bevorzugten Ausführung sind die Magnete 48 daher so angeordnet und polarisiert, daß ein Vertauschen der Schichtstruktur, falsches Anordnen usw. nicht auftreten kann. Hierzu befinden sich beispielsweise die Magnete 48 der ersten Lage 26 weit außen, die Magnetverbindung zwischen der zweiten und dritten Lage 28, 30 befindet sich dagegen weiter in Nähe der Öffnung 34 bzw. 36. Die Magnete sind so angeordnet, daß keine Magnetverbindung auftritt, wenn beispielsweise die dritte Lage auf die erste gelegt wird. Zusätzlich tritt eine Abstoßung in diesem Fall ein.

Im Gegensatz hierzu ist der Block 24 im Ausführungsbeispiel nach den Figuren 5 und 6 rein mechanisch zusammengehalten. Dieser Block ist zylindrisch, die einzelnen Lagen 26 bis 30 sind somit scheibenförmige Ringe. Sie bestehen wiederum jeweils aus zwei Bausteinen 44. Von jedem Baustein 44 der zweiten Lage 28 und der dritten Lage 30 springen jeweils kurze, zylindrische Zapfen 50 zur tieferen Lage 26 bzw. 28 vor, die entsprechende Ausnehmungen 52 hat. Auf diese Weise werden übereinanderliegende Bausteine 44 formschlüssig miteinander zu einer Einheit verbunden. Die einzelnen Bausteine 44 jeder Lage liegen im Bereich einer Trennlinie 54 aneinander, ohne daß für einen speziellen Halt Befestigungs- oder Haftmittel vorgesehen sind. Es können jedoch derartige Haftmittel, wie sie durch die Magneten 46 gebildet sind, auch im Ausführungsbeispiel nach den Figuren 5 und 6 Verwendung finden. Diese können aber entfallen, wenn beispielsweise die zweite Lage um 90 Grad gegenüber den anderen Lagen 26, 30 verdreht wird und die Verbindung der Zapfen 50 mit den Ausnehmungen 52 entsprechend angepaßt wird. Dann bewirkt die zweite Lage 28 auch eine Verbindung über die Trennlinie 54 hinweg, wie sie sonst durch die Magneten 46 erhalten wird.

In einer geänderten, hier nicht dargestellten Ausführung sind die einander berührenden Flächen der Lagen 26 bis 30 mit einer Schicht versehen, die eine Verschiebung der Lagen 26 bis 30 gegeneinander behindert, beispielsweise einer dünnen Schicht aus Samt, oder sind entsprechend aufgerauht. Andererseits können auch die erste und zweite Lage 26, 28 mit Ausschnitten versehen sein, beispielsweise Kreisabschnitte mit über 180 Grad Bogenwinkel, die an den Schmalseiten der Bausteine 44 offen sind und sich am Ort der Magnete 48 (siehe Figur 4) befinden. Dem jeweiligen Ausschnitt entsprechend befinden sich an der zugewandten Unterfläche der zweiten und dritten Lage 28, 30 Formstücke, also beispielsweise wiederum Kreisabschnitte mit mehr als 180 Grad Bogenwinkel, die beim Aufeinandersetzen der Lagen 26 bis 30 des Blocks in die Ausschnitte der darunter befindlichen Lagen passen und verhindern, daß die Bausteine 44 in Gegenrichtung zu den Pfeilen nach Figur 4 voneinander getrennt werden können.

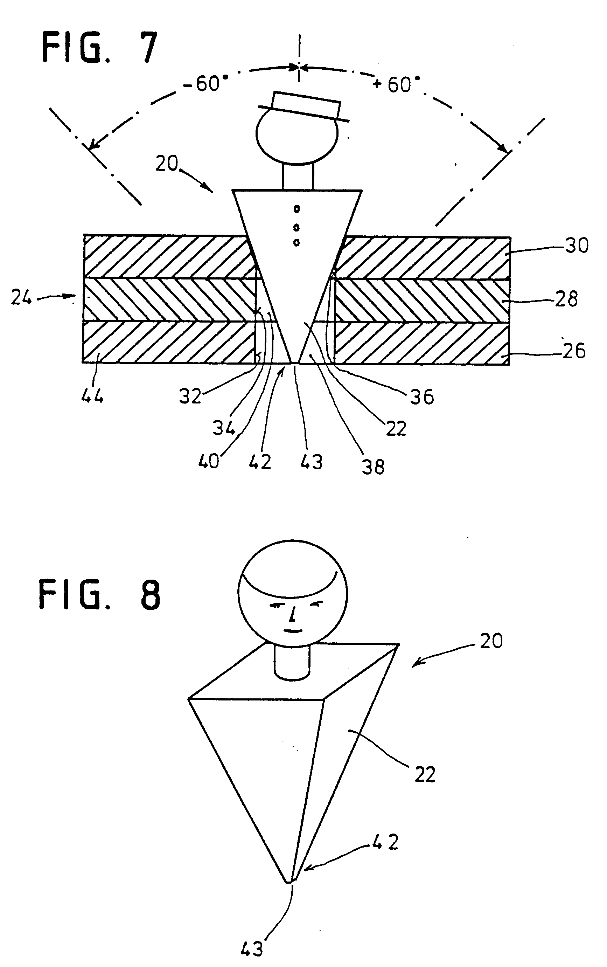

Im Ausführungsbeispiel nach Fig. 7 hat die menschliche Figur 20 einen Fußbereich 22 in Form eines geraden Kreiskegels. Genaugenommen handelt es sich sogar um einen Kegelstumpf, da der Kegel an seiner die Fußfläche42 bildenden Unterseite eine kleinflächige Abplattung 43 aufweist. Diese ist so bemessen, daß die Figur 20 mit etwas Geschick auf eine glatte horizontale Unterlage, beispielsweise eine Tischfläche, vertikal aufgestellt werden kann, ohne durch die Lagen 26 bis 30 abgestützt zu sein.

Wie in den bisher besprochenen Ausführungsbeispielen ist die Öffnung 32 der untersten Lage 26 so groß ausgeführt, also das als Freiraum 38 bezeichnete Übermaß derart und ringsum entlang der Öffnung 32 ausreichend groß bemessen, daß die erste Lage 26 allein den Fußbereich 22 und damit die gesamte Figur 20 nicht gegen ein Kippen zu halten vermag. Es tritt in keiner Winkelstellung ein Anschlag an zwei gegenüberliegenden Teilen der Öffnung 32 auf. In keiner Schräglage der Figur gegenüber der Vertikalen 56 tritt ein Formschluß bzw. ein Anschlagen an gegenüberliegende Ränder der Öffnung 32 auf.

Die Öffnung 34 der zweiten Lage 28 hat gegenüber dem ihr zugeordneten Teilstück des Fußbereichs 22 einen Luftspalt 40, der ringsum vorhanden ist, kleiner ist als der Freiraum 38 und so bemessen ist, daß der von den übereinander geschichteten ersten und zweiten Lagen 26, 28 aufgenommen Fußbereich 22 in einem Winkelbereich +/- 60° (siehe Fig. 7) frei innerhalb der Öffnungen 32, 34 kippbar ist, bei einem größeren Kippwinkel aber ein Formschluß auftritt, also der Fußbereich an gegenüberliegenden Rändern der Öffnungen 32, 34 anschlägt. Es genügt hierbei, daß ausschließlich die Öffnung 34 ohne Zusammenwirkung mit der Öffnung 32 die Kippbewegung im genannten Winkelbereich begrenzt.

Während im gezeigten Ausführungsbeispiel nach Figur 7 die Öffnungen 32 und 34 der beiden Lagen 26, 28 jeweils zylindrisch sind, ist die Öffnung 36 der dritten Lage 30 im Unterbereich zylindrisch, im Oberbereich aber exakt der Kegelform des Fußbereiches 22 angepaßt. Dadurch tritt eine exakte Passung auf, wodurch der von den Öffnungen 32 bis 36 der drei übereinander geschichteten Lagen 26 bis 30 aufgenommene Fußbereich nicht mehr gedippt werden kann. Ein Kippwinkel um geringe Winkelgrade, beispielsweise +/- 3° oder gar +/- 10° ist innerhalb der Toleranzen zulässig. Generell soll die Öffnung 36 kein Untermaß gegenüber dem ihr zugeordneten Teil des Fußbereichs 22 haben, so daß stets gewährleistet ist, daß die menschliche Figur 20 mit ihrem Fußbereich 22 auf derselben vertikalen Auflagefläche steht, auf der auch die unterste Lage 26 aufliegt.

Das Ausführungsbeispiel von Fig. 8 zeigt eine Figur 20 mit einem Fußbereich in Form einer geraden Pyramide mit quadratischer Grundfläche. Diese Ausführung soll belegen, daß eine Abkehr von der bevorzugt rotationssymmetrischen Ausbildung des Fußbereichs 22 möglich ist. Der Fußbereich 22 kann auch eine Pyramide mit anderer Grundfläche, beispielsweise der Grundfläche eines Dreiecks, Fünfecks, Sechsecks, mit ovaler Grundfläche usw. ausgeführt sein. Die Form des Fußbereichs ist grundsätzlich frei, sie sollte so ausgeführt sein, daß die Figur 20 möglicht gut als menschliche Figur zu erkennen ist.

Das Wort konvex bedeutet nach unten ballig, abgerundet, gekrümmt.


## Patentansprüche

1. Demonstrationsvorrichtung, gekennzeichnet durch eine menschliche Figur (20), die einen Kopfbereich und einen Fußbereich (22) hat, der eine nach unten konvexe oder spitze Fußfläche (42) hat, und durch einen Block (24), dessen Höhe der Höhe des Fußbereichs (22) angepaßt ist, der aus mindestens zwei und vorzugsweise drei übereinander schichtbaren Lagen (26, 30) aufgebaut ist und eine nach oben offene Ausnehmung für die Aufnahme des Fußbereichs (22) hat, die durch jeweils eine Öffnung (32, 36) in jeder Lage (26, 30) ausgebildet wird, wobei die Öffnung (32) der ersten untersten Lage (26) gegenüber dem von ihr aufgenommenen, unteren Teilstück des Fußbereichs (22) ringsum ein derartiges Übermaß (Freiraum 38) aufweist, daß allein die erste Lage (26) den Fußbereich (22) und damit die Figur (20) nur labil hält und bei Erschütterung, z. B. bei einem geringen Stoß gegen die Figur (20) nicht gegen ein Kippen zu halten vermag und die Öffnung (36) der weiteren Lage (30) dem ihr entsprechenden Teilstück des Fußbereichs (22) formmäßig so angepaßt ist, daß der von den Öffnungen (32, 36) der übereinander geschichteten Lagen (26, 30) aufgenommene Fußbereich (22) nicht in einem Winkelbereich größer +/- 10° aus der Vertikalen kippbar ist, und dadurch, daß jede Lage (26, 30) aus mindestens zwei Bausteinen (44) aufgebaut ist, die jeweils an einer Seite eine hinterschnittfreie Aussparung (33, 35) haben und diese Aussparungen (33, 35) bei zusammengesetzten Bausteinen (44) einer Lage (26, 30) die Öffnung (32, 36) bilden.

2. Demonstrationsvorrichtung nach Anspruch 1, dadurch gekennzeichnet, daß sich zwischen der ersten Lage (26) und der weiteren, dritten Lage (30) eine zweite Lage (28) befindet, die eine die Ausnehmung begrenzende Öffnung (34) hat, daß zwischen der Öffnung (34) der zweiten Lage (28) und dem entsprechenden Teilstück des Fußbereichs (22) ein Luftspalt (40) ringsrum verbleibt, der so bemessen ist, daß der von den übereinander geschichteten ersten und zweiten Lagen (26, 28) aufgenommene Fußbereich (22) in einem Winkelbereich kleiner +/- 80°, vorzugsweise kleiner +/- 45° gegenüber der Vertikalen innerhalb der Öffnungen (32, 34) kippbar ist, bei größerem Kippwinkel aber ein Formschluß zwischen diesen Öffnungen (32, 34) und dem Fußbereich (22) auftritt, und daß auch die zweite Lage (28) aus mindestens zwei Bausteinen (44) aufgebaut ist, jeweils an einer Seite eine hinterschnittfreie Aussparung (33, 35) haben und diese Aussparungen (33, 35)

EP 0 394 304 B1

bei zusammengesetzten Bausteinen (44) einer Lage (26, 28, 30) die Öffnung (32, 34, 36) bilden.

3. Demonstrationssvorrichtung nach Anspruch 1 oder 2, dadurch gekennzeichnet, daß der Fußbereich rotationssymmetrisch und die durch die drei Öffnungen (32 bis 36) gebildete Ausnehmung zylindrisch ist.

4. Demonstrationsvorrichtung nach Anspruch 3, dadurch gekennzeichnet, daß der Fußbereich (22) bis zur Höhe der ersten Lage (26) kleiner ist als eine Halbkugel mit dem Radius der Öffnung (32) der ersten Lage (26) und die erste Lage eine Höhe hat, die kleiner als dieser Radius ist.

5. Demonstrationsvorrichtung nach einem der Ansprüche 1 bis 4, dadurch gekennzeichnet, daß die Lagen gleiche Höhe aufweisen.

6. Demonstrationsvorrichtung nach einem der Ansprüche 1 bis 5, dadurch gekennzeichnet, daß jede Lage (26, 28, 30) jeweils aus zwei Bausteinen (44) gleicher Grundfläche aufgebaut ist, die auf einer Trennlinie (54) aneinanderliegen, welche auf einer Durchmesserlinie der Öffnung (32 bis 36) verläuft.

7. Demonstrationsvorrichtung nach Anspruch 6, dadurch gekennzeichnet, daß die Bausteine (44) jeder Lage und vorzugsweise die Bausteine (44) aller Lagen (26 bis 30) formgleich sind.

8. Demonstrationsvorrichtung nach einem der Ansprüche 1 bis 7, dadurch gekennzeichnet, daß der Block (24) ein gerades Prisma, insbesondere ein Quader oder Zylinder ist.

9. Demonstrationsvorrichtung nach einem der Ansprüche 1 bis 8, dadurch gekennzeichnet, daß die einzelnen Lagen Verbindungsmittel (Magnete 48; Zapfen 50 und Ausnehmungen 52) aufweisen, die eine Verbindung der Lagen (26 bis 30) untereinander ermöglichen.

10. Demonstrationsvorrichtung nach einem der Ansprüche 1 bis 9, dadurch gekennzeichnet, daß in Nähe der Trennlinie (54) an den Bausteinen (44) Verbindungsmittel (Magnete 46) vorgesehen sind.

**Claims**

1. Demonstration device, characterized by a human figure (20), which has a head area and a foot area (22), which foot area has a foot surface (42) that is convex or pointed downwards, and by a block (24), the height of which is adapted to the height of the foot area (22), which is comprised of at least two and preferably three layers (26, 30) that can be stacked one above the other and has a recess opening for receiving the foot area (22), which recess is formed by an opening (32, 36) in each layer (26, 30), whereby the opening (32) of the first, lowest layer (26) has such an excess (free space 38) on all sides, that the first, lowest layer (26) alone holds the foot area (22) and thus the figure (20) only unstably, and in the case of vibration, e.g., in the case of a slight push against the figure (20) cannot hold it against tipping, and the opening (36) of the further layer (30) is adapted in a mold-like manner to the part of the foot area (22) corresponding to it such that the foot area (22) contained by the openings (32, 36) of the layers (26, 30) stacked one above the other cannot be tilted in an angular area greater than + 10° from the vertical, and in that, each layer (26, 30) is comprised of at least two components (44), which have an undercut-free groove (33, 35) on one side, and these grooves (33, 35) form the opening (32, 36) when the components (44) of one layer (26, 30) are put together.

2. Demonstration device in accordance with Claim 1, characterized in that a second layer (28) is located between the first layer (26) and the further, third layer (30), said second second layer (28) having an opening (34) confining a recess, that an air gap (40) remains on all sides between the opening (34) of the second layer (28) and the corresponding part of the foot area (22), which is designed such that the foot area (22) contained by the first, lowest and second layers (26, 28) stacked one above the other can be tilted in an angular range smaller than ± 80°, preferably smaller than ± 45°, opposite the vertical within the openings (32, 34); however, at a greater tilt angle, a closing shape occurs between these openings (32, 34) and the foot area (22), and that also the second layer (28) is comprised of at least two components (44), which have an undercut-free groove (33, 35) on one side, and these grooves (33, 335) form the opening (32, 34, 36) when the components (44) of a layer (26, 28, 30) are put together.

3. Demonstration device in accordance with Claim 1 or 2, characterized in that the foot area is rotationally symmetrical and the recess formed by the three openings (32 to 36) is cylindrical.

4. Demonstration device in accordance with Claim 3, characterized in that the foot area (22) up to the level of the first layer (26) is smaller than a semicircle with the radius of the opening (32) of the first layer (26), and the first layer has a height which is smaller than this radius.

5. Demonstration device in accordance with one of the Claims 1 to 4, characterized in that the layers have equal heights.

6. Demonstration device in accordance with one of the Claims 1 to 5, characterized in that each layer (26, 28, 30) is, in each case, comprised of two components (44) of equal area, which are adjacent to each other on a separating line (54), which runs on a diametrical line of the opening (32 to 36).

7. Demonstration device in accordance with Claim 6, characterized in that the components (44) of each layer and preferably the components (44) of all layers (26 to 28) have the same shape.

8. Demonstration device in accordance with one of Claims 1 to 7, characterized in that the block (24) is a straight prism, especially a cube or a cylinder.

9. Demonstration device in accordance with one of Claims 1 to 8, characterized in that the individual layers have connection means (magnets 48; pegs 50; recesses 52) which make it possible to connect the layers (26 to 30) with one another.

10. Demonstration device in accordance with one of Claims 1 to 9, characterized in that connection means (magnets 46) are provided on the components (44) near the separating line (54).

## Revendications

1. Duromètre pour contrôler la dureté sous charge, comprenant au moins une sonde de mesure (20) sous la forme d'un appareil tenu à la main, possédant un boîtier (24) semblable à un crayon, dans lequel un résonateur (34) en forme de barreau est logé mobile en translation, résonateur qui a) présente une pointe de mesure (22) sur sa partie extrême libre, dépassant du boîtier, b) est appuyé par un ressort (56) vis-à-vis du boîtier (24) et c) est relié à des transducteurs ultrasoniques (46, 48) raccordés à un générateur électronique (50) et un circuit récepteur détectant des changements de la durée d'une vibration du résonateur, ou détectant sa fréquence, et un appareil de base (74) comportant une unité d'affichage (76) et relié par une ligne de connexion (72) à la sonde de mesure (20), caractérisé en ce qu'une mémoire (66) pour la mémorisation de paramètres individuels du résonateur (34) en forme de barreau et le générateur électronique (50) sont disposés dans le boîtier (24) de la sonde de mesure (20) et que l'appareil de base (74) peut être relié de façon détachable à au moins une sonde de mesure (20).

2. Duromètre selon la revendication 1, caractérisé en ce qu'il comprend différentes sondes de mesure (2.0) conçues chacune pour une force de contrôle préfixée (par exemple pour 2, 10, 50 N).

3. Duromètre selon la revendication 1 ou 2, caractérisé en ce que le boîtier de la sonde de mesure (20) contient un interrupteur (64) pour déclencher le processus de mesure (côté réception) pendant la durée d'une vibration du résonateur (34), interrupteur qui possède un élément de déclenchement (62) réagissant à la position du resonateur (34) mobile en translation.

4. Duromètre selon une des revendications 1 à 3, caractérisé en ce que l'électronique de réception est conçue pour une mesure de courte durée, par exemple une mesure en moins de 20 ms, correspondant à la durée d'une vibration du résonateur (34).

5. Duromètre selon une des revendications 1 à 4, caractérisé en ce que le ressort (56) est un ressort hélicoïdal.

6. Duromètre selon une des revendications 1 à 5, caractérisé en ce qu'il comporte plusieurs ressorts (56) placés l'un derrière l'autre et ayant des constantes de ressort différentes.

7. Duromètre selon une des revendications 1 à 6, caractérisé en ce que le résonateur (34) en forme de barreau présente une plus petite section droite, de préférence circulaire, dans sa partie extrême libre, reliée à la pointe de contrôle (22), qu'à son autre extrémité (60), le rapport des sections droites étant de préférence supérieur à 1 : 2.

8. Duromètre selon la revendication 7, caractérisé en ce que le résonateur (34) possède une forme cylindrique avec un diamètre relativement grand sur la moitié environ de sa longueur totale et se raccorde ensuite par une partie tronconique (78) à une partie cylindrique de plus petit diamètre, et que cette deuxième partie cylindrique représente environ 32% de la longueur totale du résonateur (34).

9. Duromètre selon la revendication 7 ou 8, caractérisé en ce que le résonateur (34) présente une fente (38) dans sa partie extrême voisine de sa pointe de contrôle (22) et(ou que la pointe de contrôle (22) est reliée à un support (36) pouvant être attaché de façon amovible à l'extrémité libre du résonateur (34).

10. Duromètre selon une des revendications 7 à 9, caractérisé en ce que le résonateur (34) est entouré sur la majeure partie de sa longueur totale par un tube guide (40) formant des réceptions pour des vis de fixation (42) qui coopèrent d'une part avec un épaulement (54) et sur lesquelles s'appuie d'autre part le ressort (56).

FIG. 1

FIG. 2

FIG. 3

FIG. 4

FIG. 5

FIG. 6

FIG. 7

FIG. 8